Europäisches Patentamt

European Patent Office

Office européen des brevets

(19)

(11) Veröffentlichungsnummer : **0 451 240 B1**

(12) **EUROPÄISCHE PATENTSCHRIFT**

(45) Veröffentlichungstag der Patentschrift :
04.08.93 Patentblatt 93/31

(51) Int. Cl.$^5$ : **B60T 8/32**

(21) Anmeldenummer : **90915449.4**

(22) Anmeldetag : **31.10.90**

(86) Internationale Anmeldenummer :
**PCT/EP90/01821**

(87) Internationale Veröffentlichungsnummer :
**WO 91/06453 16.05.91 Gazette 91/11**

(54) **VERFAHREN ZUM STEUERN DES BREMSDRUCKES IN EINER BLOCKIERGESCHÜTZTEN FAHRZEUGBREMSANLAGE.**

(30) Priorität : **02.11.89 DE 3936510**

(43) Veröffentlichungstag der Anmeldung :
**16.10.91 Patentblatt 91/42**

(45) Bekanntmachung des Hinweises auf die
Patenterteilung :
**04.08.93 Patentblatt 93/31**

(84) Benannte Vertragsstaaten :
**DE ES FR GB IT**

(56) Entgegenhaltungen :
**EP-A- 198 691**
**EP-A- 329 071**
**EP-A- 334 275**
**EP-A- 338 414**
**WO-A-88/02709**

(73) Patentinhaber : **LUCAS INDUSTRIES public limited company**
**Great King Street**
**Birmingham, B19 2XF West Midlands (GB)**

(72) Erfinder : **BRASCHEL, Volker**
**Fliedergarten 57**
**W-5450 Neuwied (DE)**
Erfinder : **SEITZ, Dieter**
**Fliedergarten 49**
**W-5450 Neuwied (DE)**

(74) Vertreter : **von Hellfeld, Axel, Dr. Dipl.-Phys. et al**
**Wuesthoff & Wuesthoff Patent- und Rechtsanwälte Schweigerstrasse 2**
**W-8000 München 90 (DE)**

EP 0 451 240 B1

## Beschreibung

Die Erfindung betrifft ein Verfahren zum Steuern des Bremsdruckes in einer blockiergeschützten Fahrzeugbremsanlage mit den Merkmalen des Oberbegriffs des Patentanspruches 1.

Bei einem blockiergeschützten Bremsvorgang wird die Drehgeschwindigkeit eines gebremsten Rades gemessen und dann, wenn die Verzögerung und/oder der Schlupf des Rades vorgegebene Schwellenwerte überschreiten, der Bremsdruck an dem betreffenden Rad abgebaut, damit es wieder beschleunigt wird, um aus dem blockiergefährdeten, sogenannten instabilen Bereich der Reibbeiwert/Schlupf-Kurve in den stabilen Bereich dieser Kurve zu gelangen.

Im Stand der Technik, siehe z.B. EP-A-0 329 071, sind unterschiedliche Kriterien für die Festlegung des Zeitpunktes, an dem der Bremsdruckabbau beendet wird, bekannt. So ist zum Beispiel vorgeschlagen worden, den Druckabbau dann zu stoppen, wenn die Radumfangsbeschleunigung einen vorgegebenen Wert erreicht (z.B. - 1 g). Gemäß einer anderen bekannten Lösung wird der Druckabbau dann gestoppt, wenn die Radumfangsverzögerung nicht mehr weiter zunimmt (Wendepunkt). Gemäß einer dritten bekannten Lösung wird der Druckabbau dann gestoppt, wenn die Abnahme der Radumfangsbeschleunigung bzw. -verzögerung einen vorgegebenen Wert erreicht.

Diese bekannten Lösungen werfen aber insbesondere auf Straßen mit sehr hohem Reibbeiwert Probleme auf, weil es durch die sogenannten Totzeiten (Erfassung der Drehzahl der Räder, Berechnung der Ventilsteuersignale und Schaltzeiten der Magnetventile) zu einem relativ langen Druckabbau oder zu spätem Druckabbauende kommt, so daß Bremsweg verschenkt wird (sogenannte Unterbremsung). Bei Straßen mit geringem Reibbeiwert ist andererseits bei den obengenannten Lösungen der Druckabbau zu gering, wenn dieser bereits bei z.B. - 1 g beendet wird.

Im Stand der Technik ist es auch bekannt, für den Druckabbau feste Zeitspannen vorzugeben und danach eine feste Haltezeit vorzusehen, nach welcher der Druckabbau fortgesetzt wird. Dieses Verfahren hat aber eine große sogenannte Regelabweichung zur Folge, wenn der erste Druckabbau nicht ausreichend war, um das Rad wieder in den stabilen Bereich der Reibbeiwert/Schlupf-Kurve zu bringen. Dies gilt insbesondere für geringe Reibbeiwerte, da die Dauer des ersten Druckabbaus so ausgelegt sein muß, daß bei einem hohen Reibbeiwert keine Unterbremsung erfolgt.

Bei hohen Reibbeiwerten (guten Straßenverhältnissen) kann also eine zu starke Unterbremsung (Verschenkung von Bremsweg) somit nur durch ein relativ frühzeitiges Beenden des Bremsdruckabbaus verhindert werden. Ein vorzeitiges Druckabbauende hat beim Stand der Technik aber den Nachteil zur Folge, daß bei zunehmendem Massenträgheitsmoment die Regelabweichungen (Schwankungen des Bremsdruckes) relativ gering sind und die Gefahr besteht, daß die Räder zu lange in zu hohem Schlupf laufen oder gar frühzeitig blockieren.

Eine blockiergeschützte Bremsung hängt, wie vorstehend erläutert, von den Massenträgheitsmomenten ab. Das System aus Bremse und Fahrzeug kann sehr unterschiedliche Massenträgheitsmomente aufweisen, welche insbesondere davon abhängen, ob eine Leichtmetallfelge oder eine Stahlfelge verwendet wird, ob der Raddurchmesser groß oder klein ist, ob das abgebremste Rad angetrieben wird, ob der Fahrzeugantrieb eingekuppelt ist oder nicht, in welchem Gang gefahren wird und ob alle Räder eingekuppelt sind.

Der Erfindung liegt die Aufgabe zugrunde, ein Verfahren zum Steuern des Bremsdruckes in einer blockiergeschützten Fahrzeugbremsanlage zu schaffen, das auch bei sehr unterschiedlichen Massenträgheitsmomenten einen kurzen Bremsweg bei guter Lenkbarkeit des Fahrzeuges ermöglicht. Das Verfahren soll eine gute Bremswirkung sowohl bei geringen als auch bei guten Reibbeiwerten und auch bei schnellem Wechsel zwischen Be- und Entlastung des Rades ermöglichen. Eine Unterbremsung soll verhindert werden.

Die erfingungsgemäße Lösung dieser Aufgaben sieht vor, daß die Druckabbauzeitspanne eines gerade laufenden Regelzyklus errechnet wird als Produkt aus zumindest einem ersten Faktor, der abhängig ist von der Druckabbauzeitspanne im vorangegangenen Regelzyklus, und einem zweiten Faktor, der abhängig ist von der maximalen Wiederbeschleunigung im vorangegangenen Regelzyklus des Rades.

Die Druckabbauzeitspanne im allerersten Regelzyklus (für den es ja keinen vorangegangenen Regelzyklus gibt) wird in herkömmlicher Weise durch Überschreiten von Schlupf- und/oder Verzögerungsschwellenwerten bezüglich des abgebremsten Rades bestimmt und gemessen. Der gemessene Wert für die Druckabbauzeitspanne wird im Rechner abgelegt und dient als Grundlage für die Bemessung der Druckabbauzeitspanne im folgenden Regelzyklus.

Gemäß einer bevorzugten, besonders einfachen Ausgestaltung der Erfindung ist vorgesehen, daß der erste Faktor die Druckabbauzeitspanne im vorangegangenen Regelzyklus selbst ist. Alternativ zu dieser Lösung kann der erste Faktor aber ganz allgemein in Abhängigkeit von der Druckabbauzeitspanne im vorangegangenen Regelzyklus bestimmt werden, z.B. dadurch daß diese Druckabbauzeitspanne des vorangegangenen Regelzyklus mit einem bestimmten Multiplikator (Gewichtsfaktor) multipliziert in das Endergebnis für die Druckabbauzeitspanne des gerade laufenden Regelzyklus eingeht.

In einer bevorzugten einfachen Ausgestaltung der Erfindung ergibt sich der zweite, von der maximalen Wiederbeschleunigung des Rades im vorangegangenen Regelzyklus abhängige Faktor als Quotient aus einem vorgegebenem Wert und der im vorangegangenen Regelzyklus gemessenen maximalen Wiederbeschleunigung des Rades.

Somit ergibt sich erfindungsgemäß die Druckabbauzeitspanne gemäß folgender Gleichung:

$$t_{ab}^{n} = t_{ab}^{n-1} \times \frac{peak - soll}{peak_{n-1}}$$

wobei

$t_{ab}^{n}$      die Druckabbauzeitspanne im gerade laufenden Regelzyklus (n) ist,

$t_{ab}^{n-1}$      die Druckabbauzeitspanne im vorangegangenen Regelzyklus (n-1) ist,

peak-soll      ein vorgegebener Wert (ggf. als Funktion bestimmer Parameter, siehe unten) ist und

$peak_{n-1}$      die maximale Wiederbeschleunigung des gebremsten Rades im vorangegangenen Regelzyklus (n-1) ist.

Erfindungsgemäß wird also die Druckabbauzeitspanne für einen gerade laufenden Regelzyklus jeweils neu berechnet. Ausganspunkt für diese Berechnung sind Daten, die im vorangegangenen Regelzyklus gemessen worden sind, nämlich zum einen die Druckabbauzeitspanne im vorangegangenen Regelzyklus und zum anderen die maximale Wiederbeschleunigung des Rades im vorangegangenen Regelzyklus. War die maximale Wiederbeschleunigung im vorangegangenen Regelzyklus relativ klein, so wird die Druckabbauzeitspanne im gerade laufenden Regelzyklus im Vergleich mit der Druckabbauzeitspanne im vorangegangenen Regelzyklus relativ groß. War umgekehrt die Wiederbeschleunigung des Rades im vorangegangenen Regelzyklus relativ groß, so wird die Druckabbauzeitspanne im gerade laufenden Regelzyklus im Vergleich zur Druckabbauzeitspanne im vorangegangenen Regelzyklus relativ klein.

Vorstehend sind die Grundlagen und die Haupt-Regelparameter des Bremsalgorithmus beschrieben. Unter besonderen Umständen sieht die Erfindung gemäß bevorzugten Ausgestaltungen Verfeinerungen und Modifikationen des Grund-Algorithmus vor.

So wird gemäß einer bevorzugten Variante der Erfindung die Druckabbauzeitspanne eines gerade laufenden Regelzyklus dann gegenüber der sich aus den obengenannten zwei Faktoren ergebenden Zeitspanne verlängert, wenn die Verzögerung und/oder der Schlupf des gebremsten Rades größer werden als vorgegebene Schwellenwerte. Ein Überschreiten der vorgegebenen Schwellenwerte zeigt nämlich an, daß Gefahr besteht, daß das Rad in einen besonders instabilen Zustand läuft, so daß es vorteilhaft ist, die Druckabbauzeitspanne im gerade laufenden Zyklus zu verlängern. Dabei kann das Maß der Verzögerung und/oder des Schlupfes des Rades gemessen und die Verlängerung der Druckabbauzeitspanne proportional zu den gemessenen Werten durchgeführt werden, z.B. kann die Druckabbauzeitspanne um eine Millisekunde pro 2 km/h Schlupf oder pro 2 g Radumfangsverzögerung, jeweils oberhalb eines vorgegebenen Schwellenwertes, verlängert werden. Hiermit wird bei einem sogenannten negativen μ-Sprung (Reibbeiwert-Sprung) eine schnelle Druckabsenkung erreicht.

Wie oben erläutert, ergibt sich gemäß dem Grund-Algorithmus der Erfindung die Druckabbauzeitspanne im gerade laufenden Regelzyklus als Produkt aus zwei Faktoren, wobei der zweite Faktor ein Quotient ist, in dessen Nenner die im vorangegangenen Regelzyklus gemessene maximale Wiederbeschleunigung des Rades steht. Im Zähler des Quotienten steht ein Wert, der gemäß einer einfachsten Ausgestaltung der Erfindung fest vorgegeben wird. Gemäß einer bevorzugten Weiterbildung der Erfindung ist vorgesehen, den vorgegebenen Wert als Funktion der Geschwindigkeitsabnahme des Rades im vorangegangenen Regelzyklus zu verändern. Wenn nämlich im vorangegangenen Regelzyklus nach Beginn eines Druckabbaus nur noch eine geringe Geschwindigkeitsabnahme erfolgte, zeigt dies an, daß die Reibbeiwert-Schlupf-Kurve noch weiter ansteigt (z.B. Tiefschnee) und deshalb die Druckabbauten (d.h. Druckabbauzeitspannen) relativ klein sein sollten. Wird deshalb im vorangegangenen Regelzyklus eine geringe Geschwindigkeitsabnahme gemessen, so wird der im Zähler des Quotienten stehende vorgegebene Wert relativ klein gehalten, um eine kurze Druckabbauzeitspanne zu erzielen.

Ist die erfindungsgemäß für den gerade laufenden Regelzyklus errechnete Druckabbauzeitspanne abgelaufen, so wird der Druckabbau unterbrochen und der Bremsdruck an der Bremse des betroffenen Rades zunächst konstant gehalten. Gemäß einer bevorzugten Ausgestaltung der Erfindung wird der Druckabbau dann fortgesetzt, wenn seit Beendigung des vorangegangenen Druckabbaus die Radumfangsgeschwindigkeit um einen bestimmten Betrag von z.B. 2 bis 10 km/h abgenommen hat. Dies gilt selbstverständlich nur dann, wenn das Rad noch nicht in einem blockiergefährdeten Zustand ist. Mit anderen Worten: Wenn das Rad in einen blockiergefährdeten Zustand gerät (was in herkömmlicher Weise durch Messung der Verzögerung und/oder des Schlupfes und Vergleich mit Schwellenwerten festgestellt wird), wird die Konstanthaltung des Druckes sofort unterbrochen und der Druckabbau fortgesetzt. Bei Blockierneigung erfolgt keine Konstanthaltung des Druckes.

Andererseits wird gemäß einer weiteren Modifikation des erfindungsgemäßen Verfahrens dann, wenn das gebremste Rad während des gerade laufenden Regelzyklus vor Ablauf der Druckabbauzeitspanne eine Wiederbeschleunigung erfährt, die größer ist als ein vorgegebener Schwellwert, der Bremsdruckabbau sofort beendet.

Eine weitere Verfeinerung des erfindungsgemäßen Verfahrens berücksichtigt, daß dann, wenn im vorangegangenen Regelzyklus die sogenannte Regelabweichung (Druckänderung $\Delta$ p während des Regelzyklus) sehr gering war, die im vorangegangenen Regelzyklus gemessene maximale Wiederbeschleunigung des gebremsten Rades nicht sehr aussagefähig ist für eine Neuberechnung der Druckabbauzeitspanne, weshalb in diesem Falle die Druckabbauzeitspanne des gerade laufenden Regelzyklus gleichgesetzt wird der Druckabbauzeitspanne des vorangegangenen Regelzyklus, wobei die oben unter besonderen Bedingungen vorgesehenen Modifikationen der Druckabbauzeitspanne ebenfalls anwendbar sind.

Die vorstehend beschriebenen Algorithmen zum Steuern des Bremsdruckes in einer ABS-Bremsanlage werden gemäß zeitgemäßer Technik druch Software implementiert, d.h. durch Programmierung eines Prozessors. Die Mittel, mit deren die einzelnen Regelparameter gemessen und verarbeitet werden sind heute ebenfalls dem Fachmann bekannt.

Nachfolgend wird ein Ausführungsbeispiel der Erfindung anhand der Zeichnung näher beschrieben. Es zeigt:

Fig. 1      schematisch über einer gemeinsamen Zeitskala den Verlauf der Umfangsgeschwindigkeit eines abgebremsten Rades, bei dem die Druckabbauzeitspanne einmal zu lang, einmal zu kurz und einmal richtig angesetzt ist, sowie die zugehörigen Verläufe der Radbeschleunigung $a_{rad}$ sowie die zugehörigen Verläufe des Bremsdruckes $p_{rad}$ an dem gebremsten Rad, und

Fig. 2a, und 2b      ein Flußdiagramm für einen erfindungsgemäßen Bremsalgorithmus.

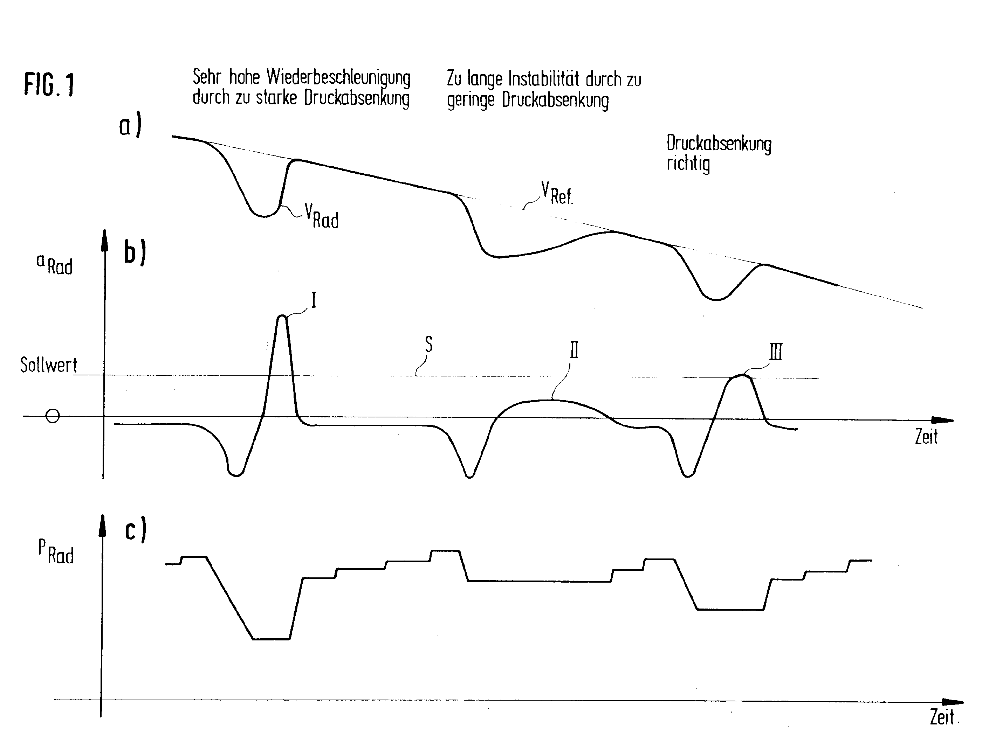

In Fig. 1 sind über einer gemeinsamen Zeitskala (Abszisse) drei Funktionen aufgetragen. Die Fig. 1a zeigt den Verlauf der Umfangsgeschwindigkeit $v_{Rad}$ eines gebremsten Rades sowie die als solche bekannte Referenzgeschwindigkeit $v_{Ref}$. Fig. 1b zeigt über der gleichen Zeitskala den Verlauf der Beschleunigung des Rades einschließlich eines gewünschten Sollwertes und Fig. 1c zeigt den zugehörigen Verlauf des Bremsdruckes, ebenfalls über der gleichen Zeitskala.

Wie in Fig. 1a bezeichnet ist, ist beim ersten Minimum der Radumfangsgeschwindigkeit die Druckabbauzeitspanne zu lang, es erfolgt eine zu starke Druckabsenkung. Dementsprechend erreicht gemäß Fig. 1b die Wiederbeschleunigung des Rades einen relativ hohen Maximalwert I, der deutlich über dem Sollwert S liegt.

Das in Fig. 1a darauffolgende Minimum der Radumfangsgeschwindigkeit $v_{Rad}$ entspricht einer zu kurzen Druckabbauzeitspanne, d.h. einer zu geringen Druckabsenkung. Dementsprechend erreicht die Wiederbeschleunigung ein relativ flaches Maximum II, das unter dem Sollwert S liegt.

Erst beim in Fig. 1a ganz rechts gezeigten Minimum der Radumfangsgeschwindigkeit $v_{Rad}$ sind die Druckabbauzeitspanne und entsprechend die Druckabsenkung richtig, so daß das Maximum III der Wiederbeschleunigungskurve mit dem Sollwert S zusammenfällt (Fig. 1b).

Aus Fig. 1 wird deutlich, daß die in einem Regelzyklus gemessene Wiederbeschleunigung eine Aussage darüber ermöglicht, ob die Druckabbauzeitspanne zu kurz oder zu lang war.

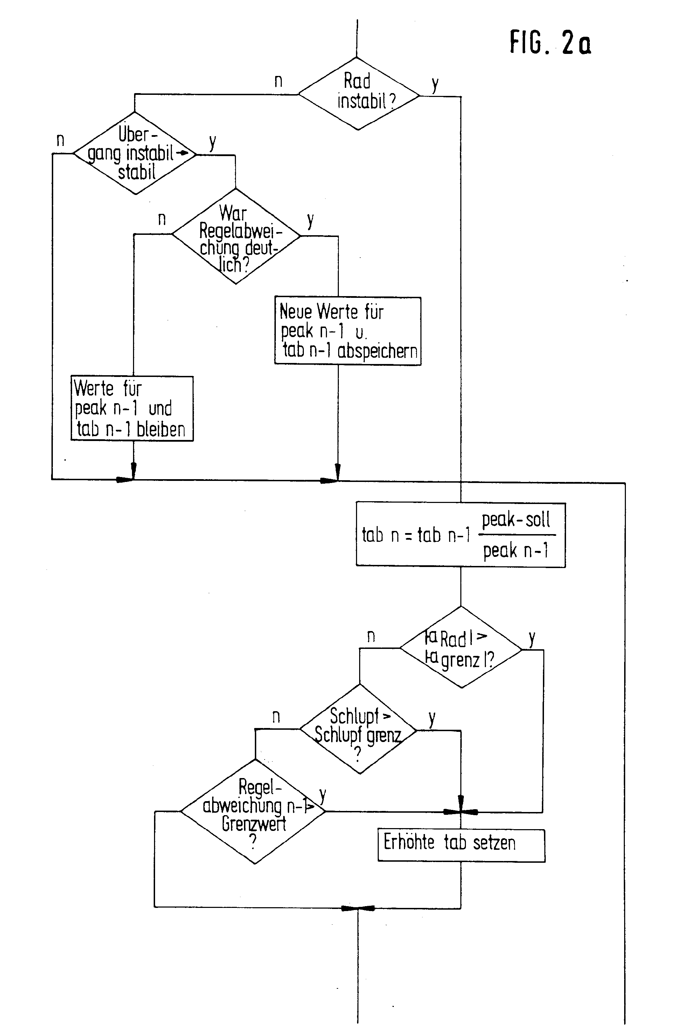

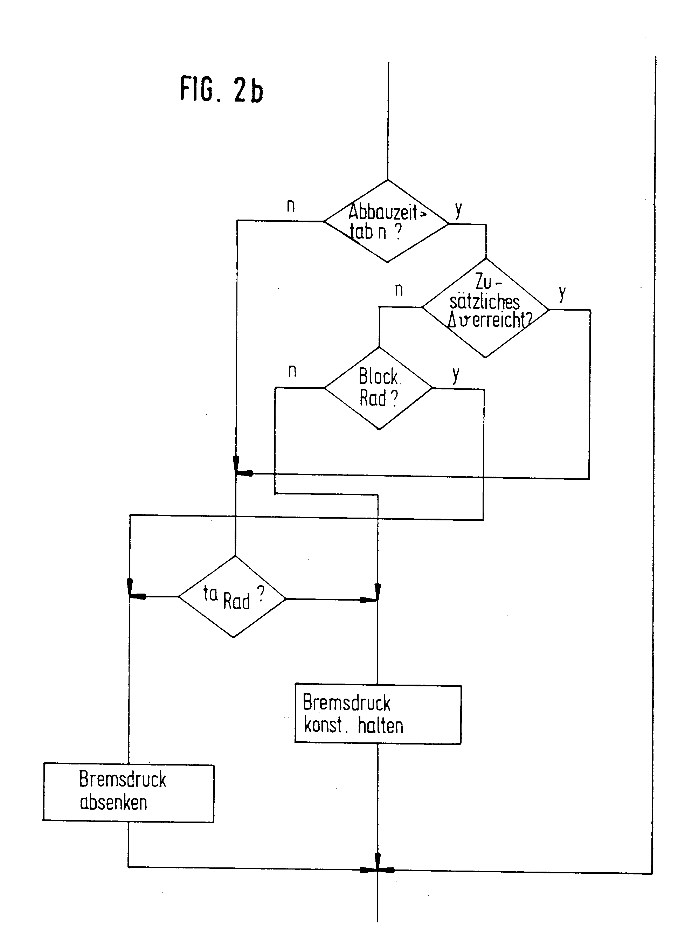

Fig. 2a und 2b zeigen ein Flußdiagramm, gemäß dem, der oben beschriebene Bremsalgorithmus implementiert werden kann.

## Patentansprüche

1.      Verfahren zum Steuern des Bremsdruckes in einer blockiergeschützten Fahrzeugbremsanlage, bei dem das Drehverhalten eines gebremsten Rades gemessen und in einer Vielzahl von aufeinanderfolgenden Regelzyklen der Bremsdruck bei Blockiergefahr während einer Druckabbauzeitspanne abgebaut und anschließend wieder aufgebaut wird,
dadurch **gekennzeichnet,**
daß die Druckabbauzeitspanne ($t_{ab}^n$) eines gerade laufenden Regelzyklus (n) errechnet wird als Produkt aus einem ersten Faktor, der abhängig ist von der Druckabbauzeitspanne ($t_{ab}^{n-1}$) im vorangegangenen Regelzyklus (n-1), und zumindest einem zweiten Faktor, der abhängig ist von der maximalen Wiederbeschleunigung ($peak_{n-1}$) des Rades im vorangegangenen Regelzyklus.

2. Verfahren nach Anspruch 1,
dadurch **gekennzeichnet,**
daß der erste Faktor die Druckabbauzeitspanne ($t_{ab}^{n-1}$) im vorangegangenen Regelzyklus ist.

3. Verfahren nach einem der Ansprüche 1 oder 2,
dadurch **gekennzeichnet,**
daß der zweite Faktor abhängig ist von einem Quotienten aus einem vorgegebenen Wert (peak-soll) und der im vorangegangenen Regelzyklus (n-1) gemessenen maximalen Wiederbeschleunigung (peak$_{n-1}$) des Rades.

4. Verfahren nach einem der vorhergehenden Ansprüche,
dadurch **gekennzeichnet,**
daß die Druckabbauzeitspanne ($t_{ab}^{n}$) eines gerade laufenden Regelzyklus (n) verlängert wird, wenn die Verzögerung und/oder der Schlupf des Rades größer werden als vorgegebene Schwellwerte.

5. Verfahren nach Anspruch 3,
dadurch **gekennzeichnet,**
daß der vorgegebene Wert (peak-soll) eine Funktion der Geschwindigkeitsabnahme des Rades im vorangegangenen Regelzyklus (n-1) ist.

6. Verfahren nach einem der vorhergehenden Ansprüche,
dadurch **gekennzeichnet,**
daß im Anschluß an eine Druckabbauzeitspanne ($t_{ab}$) im laufenden Regelzyklus (n) der Bremsdruck konstant gehalten und danach der Bremsdruckabbau fortgesetzt wird, wenn seit dem Ende der Druckabbauzeitspanne ($t_{ab}$) die Umfangsgeschwindigkeit des Rades um einen vorgegebenen Wert abgenommen hat.

7. Verfahren nach einem der vorhergehenden Ansprüche,
dadurch **gekennzeichnet,**
daß dann, wenn das gebremste Rad während des gerade laufenden Regelzyklus (n) vor Ablauf der Druckabbauzeitspanne ($t_{ab}^{n}$) eine Wiederbeschleunigung erfährt, die größer ist als ein vorgegebener Schwellwert, der Bremsdruckabbau sofort beendet wird.

8. Verfahren nach einem der vorhergehenden Ansprüche,
dadurch **gekennzeichnet,**
daß dann, wenn in dem vorangegangenen Regelzyklus (n-1) die Regelabweichung geringer war als ein vorgegebener Vergleichswert, die Druckabbauzeitspanne ($t_{ab}^{n}$) des gerade laufenden Regelzyklus (n) gleich der Druckabbauzeitspanne ($t_{ab}^{n-1}$) des vorangegangenen Regelzyklus (n-1) gesetzt wird.

**Claims**

1. A method of controlling the brake pressure in an anti-lock vehicle brake system, wherein the rotational behavior of a braked wheel is measured and, if a risk of locking exists, the brake pressure is decreased in a plurality of successive control cycles during a pressure reduction period and subsequently increased again, **characterized** in that the pressure reduction period ($t_{ab}^{n}$) of a control cycle (n) currently under way is calculated as the product of a first factor which depends on the pressure reduction period ($t_{ab}^{n-1}$) in the preceding control cycle (n-1) and at least a second factor which depends on the maximum re-acceleration (peak$_{n-1}$) of the wheel in the preceding control cycle.

2. The method as claimed in claim 1, characterized in that the first factor is the pressure reduction period ($t_{ab}^{n-1}$) in the preceding control cycle.

3. The method as claimed in one of claims 1 or 2, characterized in that the second factor depends on a quotient of a predetermined value (peak-soll) and the maximum re-acceleration (peak$_{n-1}$) of the wheel measured in the preceding control cycle (n-1).

4. The method as claimed in any one of the preceding claims, characterized in that the pressure reduction

period ($t_{ab}^n$) of a control cycle (n) currently under way is extended if the deceleration and/or slip of the wheel become greater than predetermined threshold values.

5. The method as claimed in claim 3, characterized in that the predetermined value (peak-soll) is a function of the speed reduction of the wheel in the preceding control cycle (n-1).

6. The method as claimed in any one of the preceding claims, characterized in that subsequent to a pressure reduction period ($t_{ab}$) the brake pressure is maintained constant in the current control cycle (n) and thereupon the brake pressure reduction is continued if the circumferential speed of the wheel has diminished by a predetermined value since the end of the pressure reduction period ($t_{ab}$).

7. The method as claimed in any one of the preceding claims, characterized in that the brake pressure reduction is terminated at once if the braked wheel experiences re-acceleration greater than a predetermined threshold value during the control cycle (n) currently under way, prior to the end of the pressure reduction period ($t_{ab}^n$).

8. The method as claimed in any one of the preceding claims, characterized in that the pressure reduction period ($t_{ab}^n$) of the control cycle (n) currently under way is adjusted to equal the pressure reduction period ($t_{ab}^{n-1}$) of the preceding control cycle (n-1) if the control deviation in the preceding control cycle (n-1) was less than a predetermined comparative value.

**Revendications**

1. Procédé de réglage de la pression de freinage dans un système de freinage de véhicule protégé contre le blocage des roues, selon lequel le comportement en rotation d'une roue freinée est mesuré et selon lequel, dans un grand nombre de cycles de réglage successifs, la pression de freinage est réduite pendant un intervalle de temps de réduction de pression s'il y a risque de blocage et est ensuite remontée de nouveau, caractérisé en ce que l'intervalle de temps de réduction de pression ($t_{re}^n$) d'un cycle de réglage en cours (n) est calculé comme le produit d'un premier facteur qui dépend de l'intervalle de réduction de pression ($t_{re}^{n-1}$) dans le cycle de réglage précédent (n-1) et d'au moins un deuxième facteur qui dépend de la réaccélération maximale ($pic_{n-1}$) de la roue dans le cycle de réglage précédent.

2. Procédé selon la revendication 1, caractérisé en ce que le premier facteur est l'intervalle de temps de réduction de pression ($t_{re}^{n-1}$) dans le cycle de réglage précédent.

3. Procédé selon la revendication 1 ou 2, caractérisé en ce que le deuxième facteur dépend du quotient d'une valeur préfixée (pic-co) et de la réaccélération maximale ($pic_{n-1}$) de la roue mesurée dans le cycle de réglage précédent (n-1).

4. Procédé selon une des revendications précédentes, caractérisé en ce que l'intervalle de temps de réduction ($t_{re}^n$) d'un cycle de réglage en cours (n) est prolongé si la décélération et/ou le glissement de la roue deviennent plus grands que des seuils préfixés.

5. Procédé selon la revendication 3, caractérisé en ce que la valeur préfixée (pic-co) est fonction de la diminution de vitesse de la roue dans le cycle de réglage précédent (n-1).

6. Procédé selon une des revendications précédentes, caractérisé en ce que, à la suite d'un intervalle de réduction de pression ($t_{re}$) dans le cycle de réglage en cours (n), la pression de freinage est maintenue constante et la réduction de la pression de freinage est ensuite poursuivie au cas où la vitesse périphérique de la roue a diminué d'une valeur préfixée depuis la fin de l'intervalle de temps de réduction de pression ($t_{re}$).

7. Procédé selon une des revendications précédentes, caractérisé en ce que la réduction de la pression de freinage est immédiatement arrêtée au cas où la roue freinée subit, pendant le cycle de réglage en cours (n), avant la fin de l'intervalle de temps de réduction de pression ($t_{re}^n$), une réaccélération qui est supérieure à un seuil prédéterminé.

8. Procédé selon une des revendications précédentes, caractérisé en ce que l'intervalle de temps de réduction de pression ($t_{re}^n$) utilisé dans le cycle de réglage en cours (n) est le même que l'intervalle de temps de réduction de pression ($t_{re}^{n-1}$) du cycle de réglage précédent (n-1) au cas où la déviation de réglage dans le cycle de réglage précédent (n-1) était inférieure à une valeur de comparaison préfixée.

FIG.1

a) Sehr hohe Wiederbeschleunigung durch zu starke Druckabsenkung

Zu lange Instabilität durch zu geringe Druckabsenkung

Druckabsenkung richtig

$V_{Rad}$

$V_{Ref.}$

b) $a_{Rad}$

Sollwert

I

S

II

III

Zeit

c) $P_{Rad}$

Zeit.

EP 0 451 240 B1

# FIG. 2a

Rad instabil? — n / y

Über- gang instabil→ stabil — n / y

War Regelabwei- chung deut- lich? — n / y

Neue Werte für peak n-1 u. tab n-1 abspeichern

Werte für peak n-1 und tab n-1 bleiben

$$\text{tab } n = \text{tab } n\text{-}1 \; \frac{\text{peak-soll}}{\text{peak } n\text{-}1}$$

|a Rad| > |a grenz|? — n / y

Schlupf > Schlupf grenz ? — n / y

Regel- abweichung n-1> Grenzwert ? — y

Erhöhte tab setzen

# FIG. 2b